# EUROPEAN PATENT APPLICATION

(11) **EP 3 913 619 A1**
(43) Date of publication of application: **24.11.2021**
(21) Application number: 21174231.7
(22) Date of filing: 18.05.2021
(51) Int. Cl.: G10L 17/00, G10L 17/04, G06F 21/32, H04L 29/06

(54) **SYSTEM AND METHOD FOR OBTAINING VOICEPRINTS FOR LARGE POPULATIONS**

(30) Priority: 18.05.2020 IL 27474120
(71) Applicant: Cognyte Technologies Israel Ltd, 46733 Herzliya Pituach (IL)
(72) Inventor: Sagi, Adi, 46733 HERZLIYA PITUACH (IL); Bernsohn, Dor, 46733 HERZLIYA PITUACH (IL); Rothschild, Shlomo, 46733 HERZLIYA PITUACH (IL)
(74) Representative: Stütz, Jan

(57) **Abstract**

A system, comprising a communication interface and a processor, configured to receive from a network tap, via the communication interface, multiple speech signals communicated over a communication network by respective communication devices, and based on the speech signals, obtain respective voiceprints for the communication devices.

## Description

### FIELD OF THE DISCLOSURE

The present disclosure is related to the field of communication monitoring.

### BACKGROUND OF THE DISCLOSURE

A voiceprint is a representation of features of a person's voice, which may facilitate identifying the person.

### SUMMARY OF THE DISCLOSURE

There is provided, in accordance with some embodiments of the present disclosure, a system including a communication interface and a processor. The processor is configured to receive from a network tap, via the communication interface, multiple speech signals communicated over a communication network by respective communication devices, and to obtain, based on the speech signals, respective voiceprints for the communication devices.

In some embodiments, the processor is configured to obtain the voiceprints by, for each of the communication devices:
extracting a plurality of speech samples from those of the signals that were communicated by the communication device, and
generating at least one of the voiceprints from a subset of the speech samples.

In some embodiments, the processor is configured to obtain the voiceprints by, for each of the communication devices:
selecting multiple segments of those of the signals that were communicated by the communication device,
generating respective candidate voiceprints from the segments, and
obtaining at least one of the voiceprints from the candidate voiceprints.

In some embodiments, the processor is configured to obtain the at least one of the voiceprints from the candidate voiceprints by:
clustering the candidate voiceprints into one or more candidate-voiceprint clusters,
selecting at least one of the candidate-voiceprint clusters, and
obtaining the at least one of the voiceprints from the at least one of the candidate-voiceprint clusters.

In some embodiments, the processor is configured to generate the candidate voiceprints by, for each of the segments:
extracting multiple speech samples from the segment, and
generating a respective one of the candidate voiceprints from a subset of the speech samples.

In some embodiments, the processor is configured to generate the respective one of the candidate voiceprints by:
extracting respective feature vectors from the speech samples,
clustering the feature vectors into one or more feature-vector clusters,
selecting one of the feature-vector clusters, and
generating the respective one of the candidate voiceprints from the selected feature-vector cluster.

In some embodiments, the feature vectors include respective sets of mel-frequency cepstral coefficients (MFCCs).

In some embodiments, the processor is configured to generate the respective one of the candidate voiceprints by generating an i-Vector or an X-vector from those of the sets of MFCCs in the selected feature-vector cluster.

In some embodiments, the speech signals are first speech signals and the voiceprints are first voiceprints, and the processor is further configured to:
receive a second speech signal representing speech,
generate a second voiceprint based on the second speech signal,
identify at least one of the first voiceprints that is more similar to the second voiceprint than are others of the first voiceprints, and
in response to identifying the first voiceprint, generate an output indicating that the speech may have been uttered by a user of the communication device to which the identified first voiceprint belongs.

In some embodiments, the processor is configured to identify the at least one of the first voiceprints in response to (i) respective locations at which the communication devices were located and (ii) another location at which the speech was uttered.

There is further provided, in accordance with some embodiments of the present disclosure, a method including receiving, from a network tap, multiple speech signals communicated over a communication network by respective communication devices. The method further includes, based on the speech signals, obtaining respective voiceprints for the communication devices.

There is further provided, in accordance with some embodiments of the present disclosure, a computer software product including a tangible non-transitory computer-readable medium in which program instructions are stored. The instructions, when read by a processor, cause the processor to receive, from a network tap, multiple speech signals communicated over a communication network by respective communication devices, and to obtain, based on the speech signals, respective voiceprints for the communication devices.

The present disclosure will be more fully understood from the following detailed description of embodiments thereof, taken together with the drawings, in which:

### BRIEF DESCRIPTION OF THE DRAWINGS

Fig. 1 is a schematic illustration of a system for obtaining voiceprints for large populations, in accordance with some embodiments of the present disclosure;
Fig. 2 is a schematic illustration of a technique for extracting speech samples from speech signals, in accordance with some embodiments of the present disclosure;
Fig. 3 is a schematic illustration of a technique for generating a voiceprint, in accordance with some embodiments of the present disclosure;
Figs. 4A-B are flow diagrams for algorithms for obtaining voiceprints, in accordance with some embodiments of the present disclosure;
Fig. 5 is a schematic illustration of a technique for identifying a speaker, in accordance with some embodiments of the present disclosure; and
Fig. 6 is a flow diagram for an algorithm for identifying a speaker, in accordance with some embodiments of the present disclosure.

### DETAILED DESCRIPTION OF EMBODIMENTS

### OVERVIEW

In some cases, law-enforcement agencies or other parties may wish to identify a speaker in a particular recording.

To address this need, embodiments of the present disclosure provide a system configured to obtain voiceprints from a large population, such as the population of a city or country, without requiring active participation of the population. In particular, the system continually receives speech signals communicated by various communication devices, typically by tapping a cellular network and/or another communication network. Subsequently to receiving a sufficient number of speech signals for any particular device, at least one voiceprint for the device is obtained from these speech signals. The voiceprint is then stored in a database in association with an identifier of the device and, optionally, information related to the user of the device, such as the user's name.

Subsequently to receiving a recording of an unknown speaker, the system generates a voiceprint from the recording. Next, the system attempts to match the generated voiceprint to the stored voiceprints. For each stored voiceprint that is sufficiently similar to the generated voiceprint, the system identifies the user with whom the stored voiceprint is associated as a candidate identity of the unknown speaker. In some embodiments, the candidates are restricted to those users whose communication devices are known to have been within - or at least are not known to have been outside - a predefined threshold distance of the location of the speaker close to the time of the recording.

In some embodiments, to obtain the voiceprint(s) for each device, the system first generates candidate voiceprints for the device from various segments of the speech signals communicated by the device. Next, the candidate voiceprints are clustered, and the largest one or more clusters, which represent any regular users of the device, are identified. Subsequently, a candidate voiceprint is selected from each identified cluster, and the selected voiceprints are then stored in the aforementioned database.

### SYSTEM DESCRIPTION

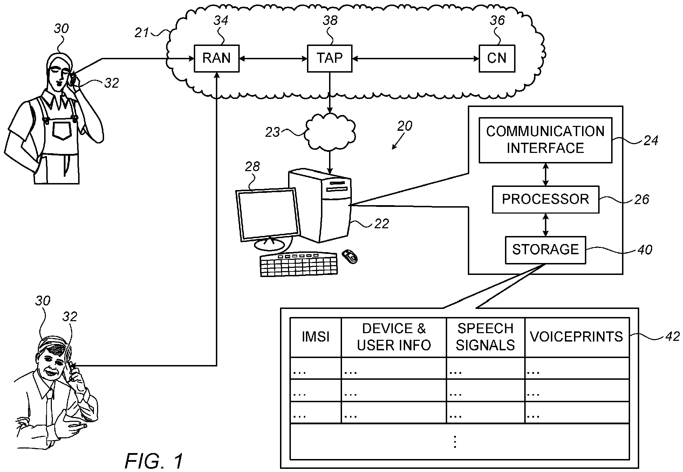

Reference is initially made to Fig. 1, which is a schematic illustration of a system 20 for obtaining voiceprints for large populations, in accordance with some embodiments of the present disclosure.

System 20 comprises a processor 26 and a communication interface 24. Processor 26 is configured to receive from a network tap 38, via communication interface 24, digital speech signals communicated over a communication network 21 by respective communication devices 32, the signals representing speech of users 30 of communication devices 32. Typically, each signal is received from network tap 38 together with corresponding metadata including at least one identifier of the communication device used to produce the signal and, optionally, the location at which the signal was produced. The communication devices may include, for example, mobile phones, landline phones, mobile computers, and/or desktop computers.

System 20 further comprises a storage device 40, such as a hard drive or flash drive. Processor 26 is configured to store at least some of the received signals in storage device 40. For example, the processor may store, in storage device 40, a database 42 in which each stored signal is associated with at least one identifier of the communication device that produced the signal. In the case of a mobile phone, this identifier may include an international mobile subscriber identity (IMSI) or a mobile station international subscriber directory number (MSISDN). Optionally, the signal may be further associated with other information relating to the device, such as the respective locations of the device at various points in time as indicated in the aforementioned metadata. Alternatively or additionally, the signal may be further associated with information relating to a user of the device, such as the user's name and/or address. Such information may be obtained from a cellular service provider, an Internet Service Provider (ISP), or any other suitable source.

Typically, communication network 21 includes a cellular communication network. In such embodiments, network tap 38 is situated within the cellular network, e.g., between the radio access network (RAN) 34 and core network (CN) 36 of the cellular network, such that speech signals communicated over the cellular network pass through network tap 38. Thus, for example, for each tapped communication session, the network tap may pass two speech signals to the processor: one signal representing speech of the caller, and another signal representing speech of the recipient of the call.

Alternatively or additionally, communication network 21 may include the Internet. For example, by tapping an ISP, network tap 38 may obtain speech signals communicated over the Internet using Voice Over Internet Protocol (VoIP). Alternatively or additionally, the communication network may include an analog telephone network.

Typically, communication interface 24 comprises a network interface controller (NIC). Via the NIC, the processor may receive the speech signals (and corresponding metadata) from the network tap over a computer network 23, such as the Internet. Alternatively or additionally, for embodiments in which the tapped communication network includes an analog telephone network, the communication interface may comprise an analog telephone adapter.

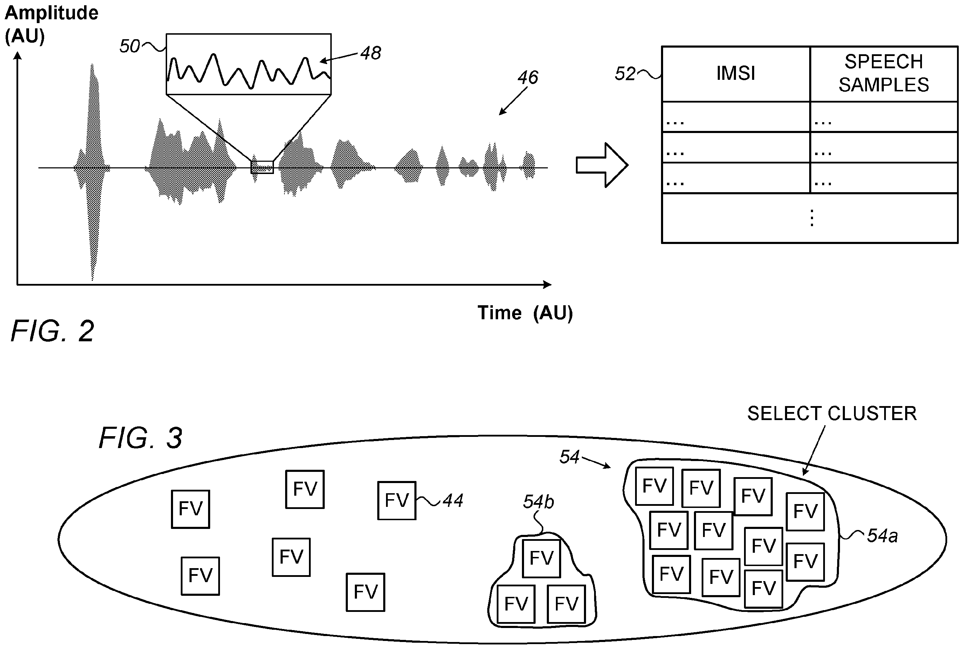

As further described below with reference to Figs. 2-4, processor 26 is configured to obtain, based on the received speech signals, respective voiceprints for communication devices 32. The processor is further configured to store the voiceprints in storage device 40. For example, the processor may associate each voiceprint, in database 42, with the identifier of the communication device to which the voiceprint belongs.

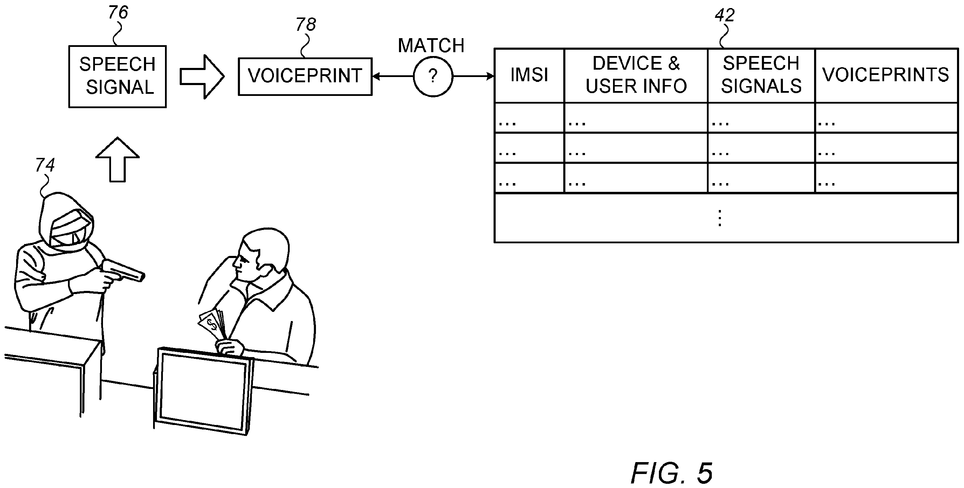

Processor 26 is further configured to retrieve the voiceprints from the storage device. As further described below with reference to Figs. 5-6, the processor may use the voiceprints to identify an unknown speaker in a recording.

In some embodiments, system 20 further comprises a monitor 28, on which the processor may display any suitable output. Alternatively or additionally to monitor 28, system 20 may comprise any other suitable peripheral devices, such as a keyboard and mouse to facilitate interaction of a user with the system.

In some embodiments, processor 26 belongs to a single server 22. In other embodiments, the processor is embodied as a cooperatively networked or clustered set of processors distributed over multiple servers, which may belong to a cloud computing facility, for example.

In some embodiments, the functionality of processor 26, as described herein, is implemented solely in hardware, e.g., using one or more Application-Specific Integrated Circuits (ASICs) or Field-Programmable Gate Arrays (FPGAs). In other embodiments, the functionality of processor 26 is implemented at least partly in software. For example, in some embodiments, processor 26 is embodied as a programmed digital computing device comprising at least a central processing unit (CPU) and random access memory (RAM). Program code, including software programs, and/or data are loaded into the RAM for execution and processing by the CPU. The program code and/or data may be downloaded to the processor in electronic form, over a network, for example. Alternatively or additionally, the program code and/or data may be provided and/or stored on non-transitory tangible media, such as magnetic, optical, or electronic memory. Such program code and/or data, when provided to the processor, produce a machine or special-purpose computer, configured to perform the tasks described herein.

### OBTAINING THE VOICEPRINTS

Reference is now made to Fig. 2, which is a schematic illustration of a technique for extracting speech samples from speech signals 46, in accordance with some embodiments of the present disclosure.

In some embodiments, for each communication device, the processor extracts multiple speech samples 48 from those of the received signals 46 that were communicated by the device. For example, the processor may extract speech samples 48 by applying a fixed-length window 50 to successive portions of each such signal (excluding periods of silence). The processor stores the extracted speech samples in association with an identifier of the device, e.g., in database 42 (Fig. 1) or in a separate database 52. Typically, the length of each speech sample is between 5 and 30 ms.

Reference is now made to Fig. 3, which is a schematic illustration of a technique for generating a voiceprint, in accordance with some embodiments of the present disclosure.

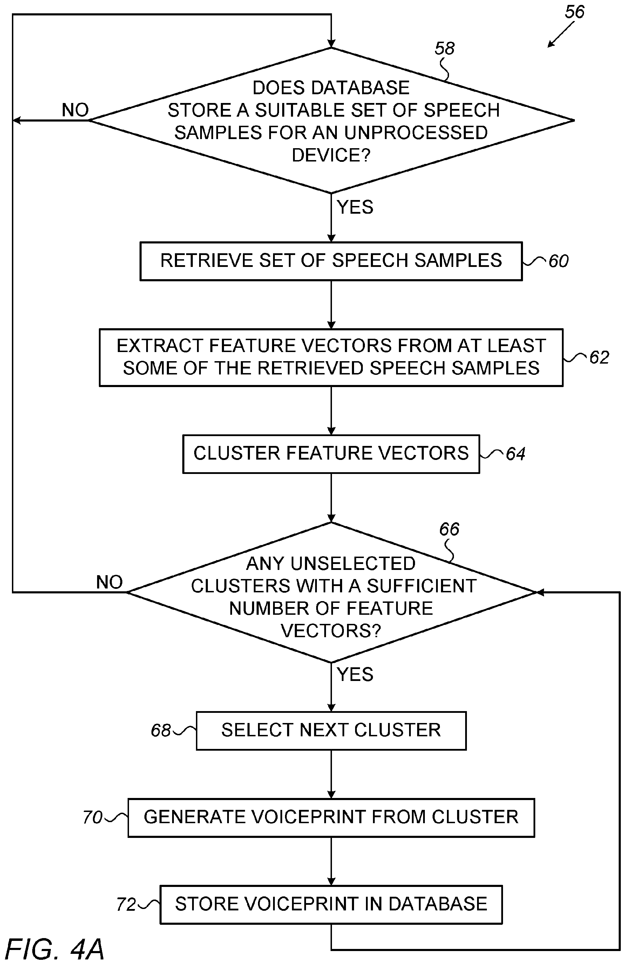

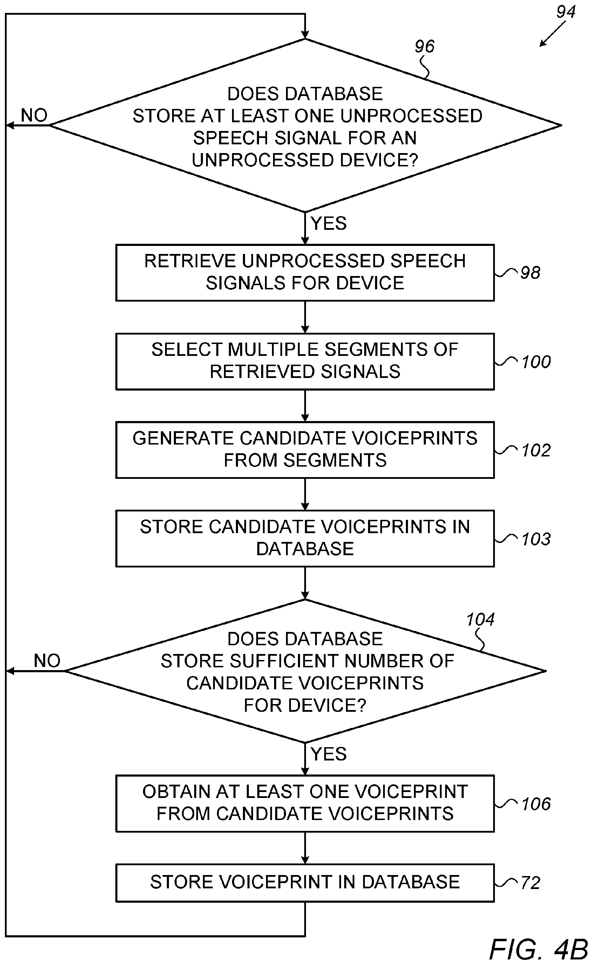

Subsequently to extracting a suitable set of speech samples (e.g., as defined below with reference to Fig. 4) for a particular device, the processor generates at least one voiceprint for the device from a subset of the extracted speech samples. In some embodiments, the processor first extracts respective feature vectors (FVs) 44 - including, for example, respective sets of mel-frequency cepstral coefficients (MFCCs) - from the speech samples. Subsequently, using any suitable clustering algorithm (e.g., k-means), the processor clusters feature vectors 44 into one or more clusters 54, each cluster 54 containing a group of the feature vectors that are similar to each other. (The clustering algorithm may use any suitable measure of similarity, such as the L2 distance or cosine similarity.) Next, the processor selects at least one of clusters 54, and then generates a voiceprint from each selected cluster.

Typically, the processor requires that the size of (i.e., the number of feature vectors in) each selected cluster exceed a predefined threshold, indicating that the speech samples represented by the cluster (i.e., the speech samples from which the feature vectors in the cluster were extracted) were uttered by a regular user of the device. In some embodiments, the processor compares the size of each cluster returned by the clustering algorithm to the threshold, and selects only those clusters whose size exceeds the threshold. In other embodiments, the predefined threshold is input to the clustering algorithm, such that the size of each cluster returned by the clustering algorithm exceeds the threshold; in such embodiments, the processor may simply select each cluster returned by the algorithm.

By way of illustration, Fig. 3 shows an example in which some of the feature vectors have been clustered into a first cluster 54a. In response to the number of feature vectors in first cluster 54a exceeding the predefined threshold, the processor selects first cluster 54a. Also in this example, others of the feature vectors have been clustered into a second cluster 54b. In response to the number of feature vectors in second cluster 54b not exceeding the threshold, the processor refrains from selecting second cluster 54b. Similarly, the processor refrains from selecting any of the feature vectors that do not lie in any cluster. Effectively, the speech samples represented by the unselected feature vectors are assumed to have been produced by one or more irregular users of the device, or to include noise.

In general, the scope of the present disclosure includes generating any suitable type of voiceprint. For example, for embodiments in which each selected cluster includes sets of MFCCs, the processor may generate an i-Vector from the sets of MFCCs in the selected cluster, as described, for example, in Verma, P. et al., 2015, i-Vectors in speech processing applications: a survey, International Journal of Speech Technology, 18(4), pp. 529-546, which is incorporated herein by reference. Alternatively, the processor may generate an X-vector from the sets of MFCCs, as described, for example, in Snyder, D. et al., 2018, X-vectors: Robust DNN embeddings for speaker recognition, 2018 IEEE International Conference on Acoustics, Speech and Signal Processing (ICASSP), pp. 5329-5333, which is incorporated herein by reference.

As described above with reference to Fig. 1, subsequently to generating each voiceprint, the processor stores the voiceprint in association with an identifier (e.g., an IMSI) of the device to which the voiceprint belongs. As further described above with reference to Fig. 1, the processor may also associate the voiceprint with other information relating to the device and/or to the user of the device.

The obtaining of voiceprints is hereby further described with reference to Fig. 4A, which is a flow diagram for an algorithm 56 for obtaining voiceprints, in accordance with some embodiments of the present disclosure. Algorithm 56 is executed by processor 26 (Fig. 1), typically in parallel to another algorithm for receiving and processing speech signals as described above with reference to Fig. 2. In other words, typically, while the latter algorithm continually stores speech samples from newly-acquired speech signals, algorithm 56 retrieves the stored speech samples and generates voiceprints therefrom.

Per algorithm 56, the processor repeatedly checks, at a first checking step 58, whether database 52 stores a suitable set of speech samples for an unprocessed device, i.e., a device for which a voiceprint has not yet been generated. Typically, a suitable set is a set in which the number of speech samples exceeds a first predefined threshold, and/or in which the speech samples were extracted from at least a second predefined threshold number of speech signals.

In response to identifying an unprocessed device having a suitable set of speech samples, the processor retrieves the set of speech samples at a retrieving step 60. Subsequently, at a feature-vector-extracting step 62, the processor extracts respective feature vectors from at least some of the retrieved speech samples. For example, the processor may randomly select some of the speech samples, and then extract feature vectors from the randomly-selected samples. (Advantageously, this technique may provide greater computational efficiency, relative to processing the entire set of speech samples.)

Next, at a feature-vector-clustering step 64, the processor clusters the extracted feature vectors. The processor then checks, at a second checking step 66, for any unselected clusters having a sufficient number of feature vectors. (As noted above with reference to Fig. 3, the threshold number of feature vectors may be input to the clustering algorithm, such that the processor may simply check whether the clustering algorithm returned any clusters.) In response to identifying such a cluster, the processor selects the cluster at a cluster-selecting step 68. Subsequently, the processor generates a voiceprint from the cluster at a voiceprint-generating step 70, and then stores the voiceprint in database 42 (Fig. 1) at a voiceprint-storing step 72. The processor then returns to second checking step 66.

Upon ascertaining, at second checking step 66, that no unselected clusters having a sufficient number of feature vectors remain, the processor returns to first checking step 58.

In some embodiments, the processor uses a predefined voiceprint-generating algorithm configured to generate a voiceprint directly from a longer speech-signal segment. For example, the processor may use an i-Vector- or X-vector-generating algorithm configured to receive, as an input, a speech-signal segment having a length of at least 30 s, and to output a voiceprint in response thereto. In such embodiments, the processor uses the predefined voiceprint-generating algorithm to generate multiple candidate voiceprints from different respective speech-signal segments, and then obtains at least one voiceprint from the candidate voiceprints.

In this regard, reference is now made to Fig. 4B, which is a flow diagram for another algorithm 94 for generating voiceprints, in accordance with some embodiments of the present disclosure. Algorithm 94 may be executed, by the processor, instead of algorithm 56 (Fig. 4A).

Per algorithm 94, the processor repeatedly checks, at a third checking step 96, whether database 42 (Fig. 1) stores at least one unprocessed speech signal for an unprocessed device. If yes, the processor retrieves the unprocessed speech signals for the device, at a signal-retrieving step 98. Subsequently, at a segment-selecting step 100, the processor selects multiple segments of the retrieved signals, each segment having a length suitable for the predefined voiceprint-generating algorithm that is to be used. (Typically, signals shorter than this length are not stored in the database.) Typically, the processor randomly chooses the starting point of each segment.

Next, at a candidate-voiceprint-generating step 102, the processor generates respective candidate voiceprints from the segments. In particular, using the predefined voiceprint-generating algorithm, the processor may, for each segment, (i) extract multiple speech samples from the segment, as described above with reference to Fig. 2, and (ii) generate a candidate voiceprint from a subset of the speech samples, as described above with reference to Fig. 3. The processor then stores the candidate voiceprints in the database, at a candidate-voiceprint-storing step 103.

Subsequently, at a fourth checking step 104, the processor checks whether the database stores a sufficient number of candidate voiceprints for the device. In other words, the processor compares the number of stored candidate voiceprints to a predefined threshold, which may be between 5 and 10, for example. If a sufficient number of candidates are stored, the processor obtains at least one voiceprint from the candidate voiceprints at a voiceprint-obtaining step 106, and then stores the voiceprint in the database at voiceprint-storing step 72. Otherwise, the processor returns to third checking step 96.

To obtain the at least one voiceprint at voiceprint-obtaining step 106, the processor typically clusters the candidate voiceprints using any suitable clustering algorithm, such as k-means. Subsequently, the processor selects each cluster whose size exceeds a predefined threshold (which may be, for example, at least 10 and/or at least 10% of the total number of candidate voiceprints), indicating that the candidate voiceprints in the cluster belong to a regular user of the device. (Optionally, the threshold may be input to the clustering algorithm, such that the processor may simply select each cluster returned by the algorithm.) The processor then obtains a voiceprint from each selected cluster, e.g., by averaging, or by simply selecting one of, the candidate voiceprints in the cluster.

### USING THE VOICEPRINTS

Reference is now made to Fig. 5, which is a schematic illustration of a technique for identifying a speaker 74, in accordance with some embodiments of the present disclosure.

Advantageously, the stored voiceprints may be used to identify speaker 74. First, a speech signal 76, which represents speech uttered by speaker 74, is generated, typically without the knowledge of the speaker. For example, a digital microphone in the vicinity of the speaker may record the speaker's speech, or a phone tap may record the speaker's speech into a public telephone.

Subsequently, speech signal 76 is provided to processor 26 (Fig. 1), and the processor then generates a voiceprint 78 based on the speech signal. Subsequently, the processor identifies each voiceprint stored in storage device 40 (Fig. 1) - e.g., each voiceprint stored in database 42 - that matches voiceprint 78. The processor then generates an output indicating that the speech may have been uttered by any of the users of the respective devices to which the matching voiceprints belong. For example, the processor may list, on monitor 28 (Fig. 1), the device-identifiers, and/or the names of the users, with which the matching voiceprints are associated. Alternatively or additionally, the processor may list this information in an audio output.

In general, to qualify as a match, a stored voiceprint must be more similar to voiceprint 78 than are others of the stored voiceprints. Thus, for example, the processor may compute a distance measure, such as a cosine similarity score, between voiceprint 78 and each of the stored voiceprints. Next, the processor may identify, as a match, each stored voiceprint for which the distance measure is less than a predefined threshold and/or is among the N smallest distance measures, where N may have any suitable integer value (e.g., between five and ten).

As described above with reference to Fig. 1, the storage device may store, for each communication device, the respective locations at which the communication device was located at various points in time. In such embodiments, the processor may identify the matching voiceprints in response to (i) the aforementioned locations, and (ii) the location at which speaker 74 uttered the speech.

For example, the processor may require that any matching voiceprint belong to a communication device that was within a predefined distance of the location of speaker 74 at a time that is within a predefined duration of the time at which the speaker uttered the speech. Alternatively or additionally, the processor may require that any matching voiceprint not belong to a communication device that was outside a predefined threshold distance of the location of speaker 74 at such a time. Thus, for example, given speech uttered by the speaker at location L₀ and time t₀ and a communication device that was at locations {L₁, L₂, ... L_{M}} at respective times {t₁, t₂, ... t_{M}}, the processor may require that ||Lₘ - L₀|| (the distance between Lₘ and L₀) be less than a predefined threshold T_{L} for at least one value of m ∈ [1 M] for which |tₘ - t₀| is less than another predefined threshold Tₜ, and/or that ||Lₘ - L₀|| not be greater than T_{L} for any m ∈ [1 M] for which |tₘ - t₀| < Tₜ.

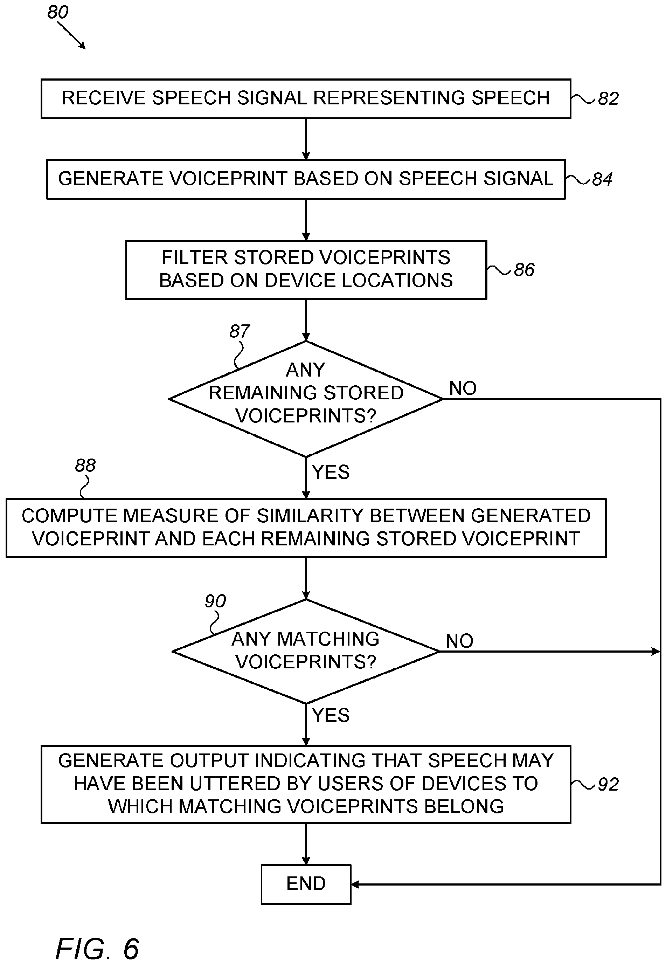

The use of the stored voiceprints for speaker identification is hereby further described with reference to Fig. 6, which is a flow diagram for an algorithm 80 for identifying a speaker, in accordance with some embodiments of the present disclosure.

Algorithm 80 begins with a speech-signal-receiving step 82, at which the processor receives speech signal 76 (Fig. 5). Subsequently to receiving the speech signal, the processor, at a voiceprint-generating step 84, generates voiceprint 78 (Fig. 5) based on the speech signal.

Next, the processor attempts to identify one or more stored voiceprints that match voiceprint 78. In particular, the processor first filters the stored voiceprints based on the device locations, at a filtering step 86. For example, as described above with reference to Fig. 5, the processor may filter out any voiceprint belonging to a device that was outside a predefined threshold distance of the location of speaker 74 close to the time at which speech signal 76 was generated. Next, at a fifth checking step 87, the processor checks whether any stored voiceprints remain, i.e., whether any stored voiceprints were not filtered out. If yes, the processor, at a computing step 88, computes a measure of similarity between voiceprint 78 and each remaining stored voiceprint. Subsequently, the processor, at a sixth checking step 90, checks whether any of the remaining stored voiceprints match voiceprint 78 by virtue of the measure of similarity for the voiceprint being less than a predefined threshold.

Provided that the processor identifies at least one matching voiceprint, the processor proceeds to an outputting step 92. At outputting step 92, the processor generates an output indicating that the speech represented by the received speech signal may have been uttered by any one of the users of the devices to which the matching voiceprints belong. Subsequently, or if no voiceprints are identified at fifth checking step 87 or sixth checking step 90, algorithm 80 ends.

It will be appreciated by persons skilled in the art that the present invention is not limited to what has been particularly shown and described hereinabove. Rather, the scope of embodiments of the present invention includes both combinations and subcombinations of the various features described hereinabove, as well as variations and modifications thereof that are not in the prior art, which would occur to persons skilled in the art upon reading the foregoing description. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A system, comprising:
a communication interface; and
a processor, configured to:
receive from a network tap, via the communication interface, multiple speech signals communicated over a communication network by respective communication devices, and
based on the speech signals, obtain respective voiceprints for the communication devices.

2. The system according to claim 1, wherein the processor is configured to obtain the voiceprints by, for each of the communication devices:
extracting a plurality of speech samples from those of the signals that were communicated by the communication device, and
generating at least one of the voiceprints from a subset of the speech samples.

3. The system according to claim 1, wherein the processor is configured to obtain the voiceprints by, for each of the communication devices:
selecting multiple segments of those of the signals that were communicated by the communication device,
generating respective candidate voiceprints from the segments, and
obtaining at least one of the voiceprints from the candidate voiceprints.

4. The system according to claim 3, wherein the processor is configured to obtain the at least one of the voiceprints from the candidate voiceprints by:
clustering the candidate voiceprints into one or more candidate-voiceprint clusters,
selecting at least one of the candidate-voiceprint clusters, and
obtaining the at least one of the voiceprints from the at least one of the candidate-voiceprint clusters.

5. The system according to claim 3, wherein the processor is configured to generate the candidate voiceprints by, for each of the segments:
extracting multiple speech samples from the segment, and
generating a respective one of the candidate voiceprints from a subset of the speech samples.

6. The system according to claim 5, wherein the processor is configured to generate the respective one of the candidate voiceprints by:
extracting respective feature vectors from the speech samples,
clustering the feature vectors into one or more feature-vector clusters,
selecting one of the feature-vector clusters, and
generating the respective one of the candidate voiceprints from the selected feature-vector cluster.

7. The system according to claim 6, wherein the feature vectors include respective sets of mel-frequency cepstral coefficients (MFCCs) .

8. The system according to claim 7, wherein the processor is configured to generate the respective one of the candidate voiceprints by generating an i-Vector or an X-vector from those of the sets of MFCCs in the selected feature-vector cluster.

9. The system according to claim 1, wherein the speech signals are first speech signals and the voiceprints are first voiceprints, and wherein the processor is further configured to:
receive a second speech signal representing speech,
generate a second voiceprint based on the second speech signal,
identify at least one of the first voiceprints that is more similar to the second voiceprint than are others of the first voiceprints, and
in response to identifying the first voiceprint, generate an output indicating that the speech may have been uttered by a user of the communication device to which the identified first voiceprint belongs.

10. The system according to claim 9, wherein the processor is configured to identify the at least one of the first voiceprints in response to (i) respective locations at which the communication devices were located and (ii) another location at which the speech was uttered.

11. A method, comprising:
receiving, from a network tap, multiple speech signals communicated over a communication network by respective communication devices; and
based on the speech signals, obtaining respective voiceprints for the communication devices.

12. The method according to claim 11, wherein obtaining the voiceprints comprises obtaining the voiceprints by, for each of the communication devices:
extracting a plurality of speech samples from those of the signals that were communicated by the communication device, and
generating at least one of the voiceprints from a subset of the speech samples.

13. The method according to claim 11, wherein obtaining the voiceprints comprises obtaining the voiceprints by, for each of the communication devices:
selecting multiple segments of those of the signals that were communicated by the communication device,
generating respective candidate voiceprints from the segments, and
obtaining at least one of the voiceprints from the candidate voiceprints.

14. The method according to claim 13, wherein obtaining the at least one of the voiceprints from the candidate voiceprints comprises:
clustering the candidate voiceprints into one or more candidate-voiceprint clusters;
selecting at least one of the candidate-voiceprint clusters; and
obtaining the at least one of the voiceprints from the at least one of the candidate-voiceprint clusters.

15. The method according to claim 13, wherein generating the candidate voiceprints comprises generating the candidate voiceprints by, for each of the segments:
extracting multiple speech samples from the segment, and
generating a respective one of the candidate voiceprints from a subset of the speech samples.
